# EUROPEAN PATENT APPLICATION

(11) **EP 3 550 926 A1**
(43) Date of publication of application: **09.10.2019**
(21) Application number: 16924476.1
(22) Date of filing: 20.12.2016
(51) Int. Cl.: H04W 74/08, H04W 72/04, H04B 7/0408

(54) **METHOD FOR TRANSMITTING DATA, TERMINAL DEVICE AND NETWORK DEVICE**

(71) Applicant: Guangdong OPPO Mobile Telecommunications Corp., Ltd., Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2016/111119
(87) International publication number: WO 2018/112757

(57) **Abstract**

Provided are a method for transmitting data, a terminal device and a network device, which can reduce a network delay. The method comprises: a terminal device determining that a pre-set condition is satisfied according to a current network condition and/or the service requirements of the terminal device; the terminal device determining, according to pre-stored first configuration information, an available resource used for the terminal device to perform uplink transmission, the first configuration information indicating the available resource used for the terminal device to perform uplink transmission; and using the determined available resource used for the terminal device to perform uplink transmission to transmit uplink data.

## Description

### TECHNICAL FIELD

The disclosure relates to the field of communication, and more particularly to a method for transmitting data, a terminal device and a network device.

### BACKGROUND

In a 5th-Generation (5G) system (which may also be called a New Radio (NR) system), coverage of different directions and areas may be implemented in a multi-beam manner, a system adopting the multi-beam manner may also be called a multi-beam system, and in such a system, different beams correspond to different directions and different coverage areas. At a high frequency band, factors such as blockage, User Equipment (UE) rotation or channel fading may make it impossible to presently communicate through a certain beam (or a certain beam pair) for communication with UE. In such a case, a network device and the UE are required to be rapidly switched to another available beam or beam pair for data transmission. However, there are usually few resources (for example, time-domain resources or frequency-domain resources) configured on the other available beam or beam pair. Therefore, communication via the other available beam or beam pair may bring a relatively long network latency.

### SUMMARY

Embodiments of the disclosure provide a method for transmitting data, a terminal device and a network device, which may reduce the network latency.

According to a first aspect, the disclosure provides a method for transmitting data, which may include the following operations.

A terminal device determines that a preset condition is met according to at least one of a present network condition or a service requirement of the terminal device.

The terminal device determines an available resource for uplink transmission of the terminal device according to pre-stored first configuration information, and the first configuration information indicates the available resource for uplink transmission of the terminal device.

The terminal device transmits uplink data via the determined available resource for uplink transmission of the terminal device.

In combination with the first aspect, in some implementation modes of the first aspect, the method may further include the following operations.

The terminal device determines, according to pre-stored second configuration information corresponding to the first configuration information, a resource for Physical Downlink Control Channel (PDCCH) detection by the terminal device. The second configuration information indicates the resource for PDCCH detection by the terminal device.

The PDCCH is detected via the determined resource for PDCCH detection by the terminal device.

In combination with the first aspect, in some implementation modes of the first aspect, the first configuration information may be different from third configuration information, and the third configuration information may indicate a resource presently used by the terminal device for uplink transmission.

In combination with the first aspect, in some implementation modes of the first aspect, the second configuration information may be different from fourth configuration information, and the fourth configuration information may indicate a resource presently used by the terminal device for detecting the PDCCH.

In combination with the first aspect, in some implementation modes of the first aspect, the operation that the terminal device determines that the preset condition is met according to at least one of the present network condition or the service requirement of the terminal device may include the following action.

The terminal device determines that the preset condition is met according to at least one of signal quality of a downlink beam corresponding to the terminal device or interference to the downlink beam.

In combination with the first aspect, in some implementation modes of the first aspect, the operation that the terminal device determines that the preset condition is met according to at least one of the signal quality of the downlink beam corresponding to the terminal device or the interference to the downlink beam may include the following action.

The terminal device determines that the preset condition is met in response to at least one of the signal quality of the downlink beam being less than a first preset threshold or the interference to the downlink beam being greater than a second preset threshold.

In combination with the first aspect, in some implementation modes of the first aspect, the first configuration information may include configuration information of at least one uplink beam, configuration information of each uplink beam may indicate a resource for uplink transmission by the terminal device on the uplink beam. The operation that the terminal device determines the available resource for uplink transmission of the terminal device according to the pre-stored first configuration information may include the following actions.

The terminal device determines configuration information of a first target beam for uplink transmission of the terminal device within the configuration information of the at least one uplink beam.

A resource indicated by the configuration information of the first target beam is determined as the available resource for uplink transmission of the terminal device.

The operation that the uplink data is transmitted via the determined available resource for uplink transmission of the terminal device may include the following action.

Uplink transmission is performed on the available resource indicated by the configuration information of the first target beam by use of the first target beam.

In combination with the first aspect, in some implementation modes of the first aspect, the second configuration information may include configuration information of at least one downlink beam, and configuration information of each downlink beam may indicate a resource for PDCCH detection by the terminal device on the downlink beam. The operation that the terminal device determines the resource for PDCCH detection by the terminal device according to the pre-stored second configuration information may include the following actions.

The terminal device determines configuration information of a second target beam for PDCCH detection by the terminal device within the configuration information of the at least one downlink beam. The second target beam is different from the downlink beam corresponding to the terminal device.

A resource indicated by the configuration information of the second target beam is determined as the resource for PDCCH detection by the terminal device.

The operation that the terminal device detects the PDCCH via the determined resource for PDCCH detection by the terminal device may include the following action.

The PDCCH is detected on the resource indicated by the configuration information of the second target beam by use of the second target beam.

In combination with the first aspect, in some implementation modes of the first aspect, the configuration information of each uplink beam may include at least one of: information about a resource for sending a Physical Uplink Control Channel (PUCCH) on the uplink beam, information about a resource for sending a Sounding Reference Signal (SRS) on the uplink beam, information about a resource for sending a Random Access Channel (RACH) on the uplink beam or information about a resource for sending a first signal on the uplink beam. The first signal is a dedicated signal for sending indication information.

In combination with the first aspect, in some implementation modes of the first aspect, the information about the resource for sending the PUCCH on each uplink beam may include at least one of: information about a time-domain resource for sending the PUCCH on the uplink beam or information about a frequency-domain resource for sending the PUCCH on the uplink beam.

The information about the resource for sending the SRS on each uplink beam may include at least one of: information about a time-domain resource for sending the SRS on the uplink beam or information about a frequency-domain resource for sending the SRS on the uplink beam.

The information about the resource for sending the RACH on each beam may include at least one of: information about a time-domain resource for sending the RACH on the uplink beam or information about a frequency-domain resource for sending the RACH on the uplink beam.

The information about the resource for sending the first signal on each beam may include at least one of: information about a time-domain resource for sending the first signal on the uplink beam or information about a frequency-domain resource for sending the first signal on the uplink beam.

In combination with the first aspect, in some implementation modes of the first aspect, the configuration information of each downlink beam may include configuration information of each downlink beam corresponding to each uplink beam.

In combination with the first aspect, in some implementation modes of the first aspect, the configuration information of each downlink beam may include at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In combination with the first aspect, in some implementation modes of the first aspect, the configuration information of each uplink beam may have a one-to-one correspondence with identification information of each uplink beam.

In combination with the first aspect, in some implementation modes of the first aspect, the identification information of each uplink beam may be an index of the uplink beam or an index of a beam group to which the uplink beam belongs.

In combination with the first aspect, in some implementation modes of the first aspect, an uplink beam corresponding to the configuration information of the uplink beam may be identified via preset identification information.

In combination with the first aspect, in some implementation modes of the first aspect, the configuration information of each downlink beam may have a one-to-one correspondence with identification information of each downlink beam.

In combination with the first aspect, in some implementation modes of the first aspect, the identification information of the downlink beam may be an index of the downlink beam or an index of a beam group to which the downlink beam belongs.

In combination with the first aspect, in some implementation modes of the first aspect, a downlink beam corresponding to the configuration information of the downlink beam may be identified via preset identification information.

In combination with the first aspect, in some implementation modes of the first aspect, the method may further include the following operation.

The terminal device sends indication information to a network device, and the indication information is configured to indicate that the terminal device uses the first configuration information.

In combination with the first aspect, in some implementation modes of the first aspect, the indication information may be carried in the PUCCH, the SRS, the RACH or the first signal.

In combination with the first aspect, in some implementation modes of the first aspect, the method may further include the following operations.

In condition that a response message for the indication information from the network device is unreceived by the terminal device or downlink data from the network device is unreceived by the terminal device within a preset time range, the terminal device retransmits the indication information or the uplink data on the first target beam.

Alternatively, in condition that the response message for the indication information from the network device is unreceived by the terminal device or the downlink data from the network device is unreceived by the terminal device within the preset time range and the at least one uplink beam includes at least two uplink beams, the terminal device determines configuration information of a third target beam within the configuration information of the at least one uplink beam, the third target beam being different from the first target beam, and sends the indication information or the uplink data on the resource indicated by the configuration information of the third target beam.

In combination with the first aspect, in some implementation modes of the first aspect, the operation that the terminal device determines the configuration information of the first target beam for uplink transmission of the terminal device within the configuration information of the at least one uplink beam may include the following actions.

The terminal device determines configuration information of a first beam in the configuration information of the at least one uplink beam as the configuration information of the first target beam for uplink transmission of the terminal device. The configuration information of the at least one uplink beam is arranged according to the configuration information of each beam.

Alternatively, the terminal device determines configuration information of any beam in the configuration information of the at least one uplink beam as the configuration information of the first target beam for uplink transmission of the terminal device.

According to a second aspect, the disclosure provides a method for transmitting data, which may include the following operations.

A network device receives indication information or uplink data sent by a terminal device according to pre-stored first configuration information. The indication information or the uplink data is configured to indicate that the terminal device uses the first configuration information.

A PDCCH is sent by use of second configuration information corresponding to the first configuration information according to the indication information or the uplink data. The second configuration information indicates a resource for PDCCH detection by the terminal device.

In combination with the second aspect, in some implementation modes of the second aspect, the first configuration information may be different from third configuration information, and the third configuration information may indicate a resource presently used by the terminal device for uplink transmission.

In combination with the second aspect, in some implementation modes of the second aspect, the second configuration information may be different from fourth configuration information, and the fourth configuration information may indicate a resource presently used by the terminal device for detecting the PDCCH.

In combination with the second aspect, in some implementation modes of the second aspect, the method may further include the following operation.

The network device sends the first configuration information and the second configuration information to the terminal device.

In combination with the second aspect, in some implementation modes of the second aspect, the first configuration information may include configuration information of at least one uplink beam, and configuration information of each uplink beam may indicate a resource for uplink transmission by the terminal device on the uplink beam.

In combination with the second aspect, in some implementation modes of the second aspect, the second configuration information may include configuration information of at least one downlink beam, and configuration information of each downlink beam may indicate a resource for PDCCH detection by the terminal device on the downlink beam.

In combination with the second aspect, in some implementation modes of the second aspect, the configuration information of each uplink beam may include at least one of: information about a resource for sending a Physical Uplink Control Channel (PUCCH) on the uplink beam, information about a resource for sending a Sounding Reference Signal (SRS) on the uplink beam, information about a resource for sending a Random Access Channel (RACH) on the uplink beam or information about a resource for sending a first signal on the uplink beam. The first signal is a dedicated signal for sending indication information.

In combination with the second aspect, in some implementation modes of the second aspect, the indication information may be carried in the PUCCH, the SRS, the RACH or the first signal.

In combination with the second aspect, in some implementation modes of the second aspect, the information about the resource for sending the PUCCH on each uplink beam may include at least one of: information about a time-domain resource for sending the PUCCH on the uplink beam or information about a frequency-domain resource for sending the PUCCH on the uplink beam.

The information about the resource for sending of the SRS on each uplink beam may include at least one of: information about a time-domain resource for sending the SRS on the uplink beam or information about a frequency-domain resource for sending the SRS on the uplink beam.

The information about the resource for sending the RACH on each beam may include at least one of: information about a time-domain resource for sending the RACH on the uplink beam or information about a frequency-domain resource for sending the RACH on the uplink beam.

The information about the resource for sending the first signal on each beam may include at least one of: information about a time-domain resource for sending the first signal on the uplink beam or information about a frequency-domain resource for sending the first signal on the uplink beam.

In combination with the second aspect, in some implementation modes of the second aspect, the configuration information of each downlink beam may include at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In combination with the second aspect, in some implementation modes of the second aspect, the configuration information of each uplink beam may have a one-to-one correspondence with identification information of each uplink beam.

In combination with the second aspect, in some implementation modes of the second aspect, the identification information of each uplink beam may be an index of the uplink beam or an index of a beam group to which the uplink beam belongs.

In combination with the second aspect, in some implementation modes of the second aspect, an uplink beam corresponding to the configuration information of the uplink beam may be identified via preset identification information.

In combination with the second aspect, in some implementation modes of the second aspect, the configuration information of each downlink beam may have a one-to-one correspondence with identification information of each downlink beam.

In combination with the second aspect, in some implementation modes of the second aspect, the identification information of the downlink beam may be an index of the downlink beam or an index of a beam group to which the downlink beam belongs.

In combination with the second aspect, in some implementation modes of the second aspect, the method is characterized in that a downlink beam corresponding to the configuration information of the downlink beam may be identified via preset identification information.

According to a third aspect, the disclosure provides a terminal device. The terminal device includes units configured to execute the method in the first aspect.

According to a fourth aspect, the disclosure provides a network device. The network device includes units configured to execute the method in the second aspect.

According to a fifth aspect, the disclosure provides a terminal device, which includes a memory, a processor and a transceiver. The memory is configured to store a program, the processor is configured to execute the program, and when the program is executed, the processor executes the method in the first aspect based on the transceiver.

According to a sixth aspect, the disclosure provides a network device, which includes a memory, a processor and a transceiver. The memory is configured to store a program, the processor is configured to execute the program, and when the program is executed, the processor executes the method in the second aspect based on the transceiver.

According to a seventh aspect, the disclosure provides a computer-readable medium, which stores a program code configured to be executed by a terminal device. The program code includes an instruction configured to execute the method in the first aspect.

According to an eighth aspect, the disclosure provides a computer-readable medium, which stores a program code configured to be executed by a network device. The program code includes an instruction configured to execute the method in the second aspect.

According to the technical solutions, the terminal device may pre-store the first configuration information, and the first configuration information indicates the resource for uplink transmission of the terminal device. Then, responsive to determining, by the terminal device, that the preset condition is met according to the network condition and/or the service requirement of the terminal device, a resource for uplink and downlink transmission of the terminal device may be reconfigured directly according to the first configuration information, without requesting the network device for acquiring the resource. Therefore, the network latency is reduced.

### BRIEF DESCRIPTION OF DRAWINGS

FIG. 1 is a schematic diagram of a communication system according to an embodiment of the disclosure.
FIG. 2 is a schematic flowchart of a method for transmitting data according to an embodiment of the disclosure.
FIG. 3A is a schematic diagram of time-domain resources occupied by a downlink beam configured for a terminal device before handover.
FIG. 3B is a schematic diagram of time-domain resources occupied by a downlink beam configured for a terminal device after handover.
FIG. 4 is a schematic flowchart of a method for transmitting data according to another embodiment of the disclosure.
FIG. 5 is a schematic block diagram of a terminal device according to an embodiment of the disclosure.
FIG. 6 is a schematic block diagram of a network device according to an embodiment of the disclosure.
FIG. 7 is a schematic block diagram of a terminal device according to an embodiment of the disclosure.
FIG. 8 is a schematic block diagram of a network device according to an embodiment of the disclosure.

### DETAILED DESCRIPTION

The technical solutions in the embodiments of the disclosure will be described below in combination with the drawings in the embodiments of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD) system, a Universal Mobile Telecommunication System (UMTS), a Worldwide Interoperability for Microwave Access (WiMAX) communication system or a future 5G system.

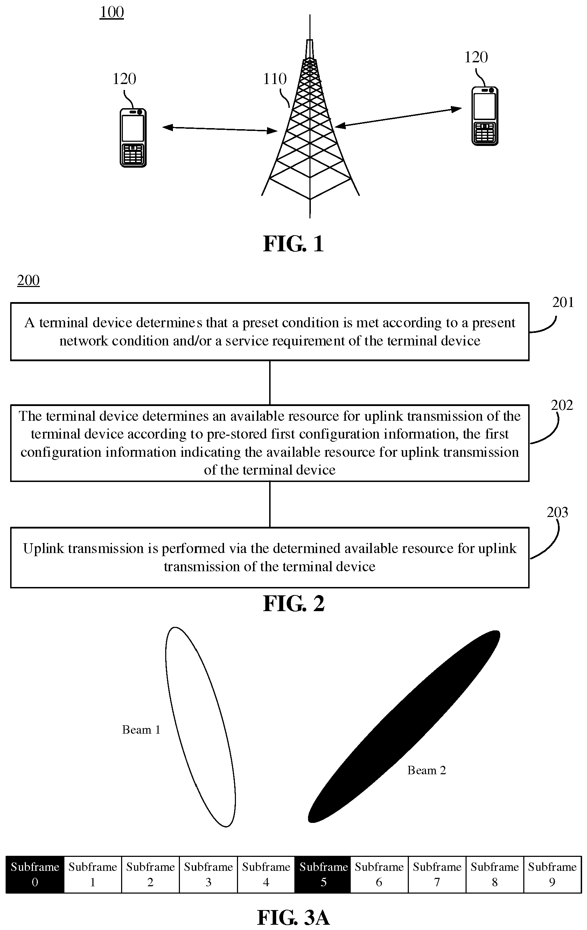

FIG. 1 illustrates a wireless communication system 100 to which the embodiments of the disclosure are applied. The wireless communication system 100 may include a network device 110. The network device 100 may be a device communicating with a terminal device. The network device 100 may provide communication coverage for a specific geographical region and may communicate with a terminal device (for example, UE) in the coverage. In at least one embodiment, the network device 100 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Alternatively, the network device may be a relay station, an access point, a vehicle-mounted device, a wearable device, a network-side device in a future 5G network, a network device in a future evolved Public Land Mobile Network (PLMN) or the like.

The wireless communication system 100 further includes at least one terminal device 120 within the coverage of the network device 110. The terminal devices 120 may be mobile or fixed. In at least one embodiment, the terminal device 120 may refer to an access terminal, User Equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in the future 5G network, a terminal device in the future evolved PLMN or the like.

In at least one embodiment, the 5G system or network may also be called an NR system or network.

A network device and two terminal devices are exemplarily illustrated in FIG. 1. In at least one embodiment, the wireless communication system 100 may include multiple network devices and another number of terminal devices may be included in coverage of each network device. There are no limits made thereto in the embodiments of the disclosure.

In at least one embodiment, the wireless communication system 100 may further include another network entity such as a network controller and a mobility management entity. There are no limits made thereto in the embodiments of the disclosure.

It is to be understood that terms "system" and "network" in the disclosure may usually be exchanged in the disclosure. In the disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

FIG. 2 is a schematic flowchart of a method for transmitting data 200 according to an embodiment of the disclosure. As illustrated in FIG. 2, the method 200 includes the following contents.

In 201, a terminal device determines that a preset condition is met according to a present network condition and/or a service requirement of the terminal device.

In 202, the terminal device determines an available resource for uplink transmission of the terminal device according to pre-stored first configuration information, and the first configuration information indicates the available resource for uplink transmission of the terminal device.

In 203, uplink data is transmitted via the determined available resource for uplink transmission of the terminal device.

In the embodiment of the disclosure, the terminal device may pre-store the first configuration information, and the first indication information indicates the resource for uplink transmission of the terminal device. When the terminal device determines that the preset condition is met according to the present network condition and/or the service requirement of the terminal device, the terminal device may actively trigger use of the first configuration information to configure the resource for uplink transmission of the terminal device, thereby solving the problem of network latency caused by the fact that, when the network condition of the terminal device gets worse or the service requirement of the terminal device is not met, the terminal device is required to further request a network device for acquiring the configuration information.

In at least one embodiment, the method further includes the following operations.

The terminal device determines, according to pre-stored second configuration information corresponding to the first configuration information, a resource configured for PDCCH detection by the terminal device. The second configuration information indicates the resource for PDCCH detection by the terminal device.

The PDCCH is detected by use of the determined resource for PDCCH detection by the terminal device.

Specifically, the first configuration information and the second configuration information may be pre-stored in the terminal device. The terminal device may determine the resource for uplink transmission according to the first configuration information. In such case, the terminal device may perform uplink transmission by use of the resource indicated by the first configuration information, and the network device, after receiving the uplink data of the terminal device, may send the PDCCH by use of the resource indicated by the second configuration information corresponding to the first configuration information. Then, the terminal device determines the resource for PDCCH detection by the terminal device according to the second configuration information and detects the PDCCH on the resource indicated by the second configuration information. That is, the resource for uplink transmission is determined at first according to the first configuration information, and then the resource for PDCCH detection is determined according to the second configuration information. Alternatively, the terminal device may simultaneously determine the resource for uplink transmission and the resource for PDCCH detection according to the first configuration information and the second configuration information, then perform uplink transmission by use of the resource indicated by the first configuration information and detect the PDCCH by use of the resource indicated by the second configuration information.

That is, when the terminal device determines that the preset condition is met according to the present network condition and/or the service requirement of the terminal device, the terminal device may actively trigger use of the first configuration information and the second configuration information, namely use of a resource indicated by new configuration information, for uplink and downlink data transmission. Therefore, the solution solves the problem of network latency caused by the fact that, when the network condition of the terminal device gets worse or the service requirement of the terminal device is not met, the terminal device is required to further request the network device for acquiring the configuration information.

In at least one embodiment, the first configuration information is different from third configuration information, and the third configuration information indicates a resource presently used by the terminal device for uplink transmission.

That is, the resource indicated by the first configuration information and configured for uplink transmission of the terminal device may be different from a resource (i.e., the resource presently used for uplink transmission) indicated by the third configuration information.

In at least one embodiment, the second configuration information is different from fourth configuration information, and the fourth configuration information indicates a resource presently used by the terminal device for detecting the PDCCH.

That is, after the terminal device performs data transmission by use of the first configuration information, the network device may send the PDCCH via the resource indicated by the second configuration information, and in such a case, the terminal device may detect the PDCCH on the resource indicated by the second configuration information. Alternatively, the network device may also continue sending the PDCCH via the resource indicated by the fourth configuration information (i.e., the resource presently used by the terminal device for detecting the PDCCH). In such case, the terminal device is not required to configure the second configuration information, namely not required to reconfigure the resource for the PDCCH detection. In condition that the network device continues sending the PDCCH via the resource indicated by the fourth configuration information, the terminal device may reduce a frequency of detecting a search space of the PDCCH, thereby saving the resource for the PDCCH detection.

In at least one embodiment, the first configuration information and the second configuration information may be sent to the terminal device by the network device in advance, and the terminal device, after receiving the first configuration information and the second configuration information, may pre-store the first configuration information and the second configuration information. The network device may send the first configuration information and the second configuration information to the terminal device through the same signal. For example, the network device may send the first configuration information and the second configuration information through the PDCCH, that is, the first configuration information and the second configuration information may be included in the PDCCH. The first configuration information and the second configuration information may also be sent to the terminal device through different signals. There are no limits made thereto in the embodiment of the disclosure.

In at least one embodiment, the method further includes the following operation.

The terminal device sends indication information to a network device, and the indication information is configured to notify the network device that the terminal device uses the first configuration information.

Specifically, the terminal device, after determining to start using the pre-stored first configuration information, may further send the indication information to the network device, and the indication information is configured to indicate that the terminal device has started using the first configuration information. Therefore, the network device may send the PDCCH on the resource indicated by the second configuration information corresponding to the first configuration information.

It is to be understood that the terminal device, after using the first configuration information, may send the indication information to the network device to notify the network device that the terminal device has started using the first configuration information, and may also not send the indication information but directly perform data transmission with the network device via the resource indicated by the first configuration information. The network device, after receiving the data transmitted via the resource indicated by the first configuration information, may also learn about that the terminal device uses the first configuration information, and then the network device may select the second configuration information corresponding to the first configuration information to send the PDCCH.

In at least one embodiment, after using the first configuration information, the terminal device may send the indication information or the uplink data to the network device, and the network device, after receiving the indication information or the uplink data, may send the PDCCH via the resource indicated by the second configuration information and may also continue sending the PDCCH via a downlink resource used previously. When the network device continues sending the PDCCH by use of the downlink resource used previously, the terminal device may reduce the frequency of detecting the search space of the PDCCH, thereby saving resources.

In at least one embodiment, the operation that the terminal device determines that the preset condition is met according to the present network condition and/or the service requirement of the terminal device includes the following action.

The terminal device determines that the preset condition is met according to at least one of signal quality of a downlink beam corresponding to the terminal device or interference to the downlink beam.

Specifically, the terminal device may determine that the preset condition is met according to the signal quality of the downlink beam corresponding to the terminal device and/or the interference to the downlink beam. For example, the terminal device may determine that the preset condition is met when the signal quality of the downlink beam is less than a first preset threshold, or the terminal device may determine that the preset condition is met when the interference to the downlink beam is greater than a second preset threshold, or the signal quality of the downlink beam and the interference to the downlink beam may also be combined to determine whether the preset condition is met.

In at least one embodiment, the first configuration information includes configuration information of at least one uplink beam, configuration information of each uplink beam indicates a resource for uplink transmission by the terminal device on the uplink beam. The operation that the terminal device determines the available resource for uplink transmission of the terminal device according to the pre-stored first configuration information includes the following actions.

The terminal device determines configuration information of a first target beam for uplink transmission of the terminal device within the configuration information of the at least one uplink beam.

The resource indicated by the configuration information of the first target beam is determined as the available resource for uplink transmission of the terminal device.

The operation that the uplink data is transmitted via the determined available resource for uplink transmission of the terminal device includes the following action.

Uplink transmission is performed on the available resource indicated by the configuration information of the first target beam by use of the first target beam.

The second configuration information includes configuration information of at least one downlink beam, and configuration information of each downlink beam indicates a resource for PDCCH detection by the terminal device on the downlink beam. The operation that the terminal device determines the resource for PDCCH detection by the terminal device according to the pre-stored second configuration information includes the following actions.

The terminal device determines configuration information of a second target beam for PDCCH detection by the terminal device within the configuration information of the at least one downlink beam. The second target beam is a beam different from the downlink beam corresponding to the terminal device.

A resource indicated by the configuration information of the second target beam is determined as the resource for PDCCH detection by the terminal device.

The operation that the PDCCH is detected by use of the determined resource configured for PDCCH detection by the terminal device includes the following action.

The PDCCH is detected on the resource indicated by the configuration information of the second target beam by use of the second target beam.

During the specific implementation, the downlink beam corresponding to the terminal device may be a primary beam in downlink beams, and the second target beam is a secondary beam in the downlink beams. In the fourth configuration information, the primary beam usually corresponds to relatively rich resources and the second target beam usually corresponds to relatively few resources. When signal quality of the primary beam and/or interference to the primary beam meet/meets the preset condition, if the PDCCH is still monitored by use of the resource corresponding to the primary beam, a relatively long network latency may be brought. In the second configuration information, the second target beam corresponds to relatively rich resources and the primary beam corresponds to relatively few resources. Therefore, the terminal device may determine the resource indicated by the configuration information of the second target beam for detecting the PDCCH. During a practical application, the second target beam is a secondary beam in the downlink beams. In such case, the terminal device detects the PDCCH on the secondary beam at a relatively high frequency. Therefore, detecting the PDCCH via the resource indicated by the second target beam may bring a relatively short network latency.

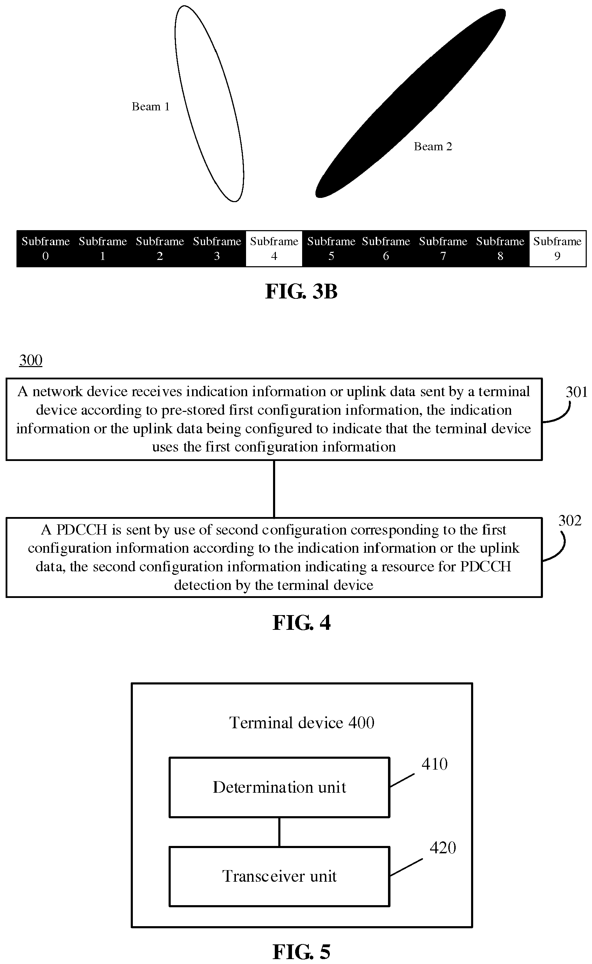

For example, as illustrated in FIG. 3A, the network device configures two operating beams (beam 1 and beam 2) for the terminal device. The beam 1 is a primary beam and the beam 2 is a secondary beam. In the fourth configuration information (i.e., the resource presently used for detecting the PDCCH), time-domain resources corresponding to the beam 1 (primary beam) are subframes 1, 2, 3, 4, 6, 7, 8 and 9, and time-domain resources corresponding to the beam 2 (secondary beam) are subframes 0 and 5. The terminal device detects the search space of the PDCCH on the beam 2 in the subframes 0 and 5, and detects the search space of the PDCCH on the beam 1 in the subframes 1, 2, 3, 4, 6, 7, 8 and 9. Therefore, the primary beam corresponds to relatively rich time-domain resources and the secondary beam corresponds to relatively few time-domain resources. In at least one embodiment, as illustrated in FIG. 3B, in the second configuration information, the configuration information of the beam 1 may be the subframes 4 and 9, and the configuration information of the beam 2 may be 0, 1, 2, 3, 5, 6, 7 and 8. That is, the primary beam corresponds to relatively few time-domain resources and the secondary beam corresponds to relatively rich time-domain resources. When signal quality of the beam 1 gets worse or the interference to the beam 1 increases, the terminal device may monitor the search space of the PDCCH via the resource indicated by the configuration information of the beam 2. Since the beam 2 corresponds to relatively rich time-domain resources, a network latency during communication between the terminal device and the network device may be reduced.

In at least one embodiment, the operation that the terminal device determines the configuration information of the first target beam for uplink transmission of the terminal device within the configuration information of the at least one uplink beam includes the following actions.

The terminal device determines configuration information of a first beam in the configuration information of the at least one uplink beam as the configuration information of the first target beam for uplink transmission of the terminal device.

Alternatively, the terminal device determines configuration information of any beam in the configuration information of the at least one uplink beam as the configuration information of the first target beam for uplink transmission of the terminal device.

Specifically, the first configuration information may include the configuration information of the at least one uplink beam, and configuration information of each uplink beam indicates the resource for uplink transmission by the terminal device on the uplink beam. For example, the configuration information of the at least one uplink beam includes configuration information of the first beam, and the configuration information of the first beam may indicate information about a resource occupied for sending a PUCCH by the terminal device on the first beam, or may also include information about a resource occupied for sending a RACH by the terminal device on the first beam, or may also include information about a resource occupied for sending an SRS by the terminal device on the first beam. The second configuration information includes configuration information of the at least one downlink beam, and configuration information of each downlink beam indicates the resource for PDCCH detection by the terminal device on the downlink beam.

The terminal device may determine the configuration information of the first target beam for uplink transmission of the terminal device within the configuration information of the at least one uplink beam. In at least one embodiment, the configuration information of the first target beam may be configuration information of the first beam in the configuration information of the at least one uplink beam, or may also be configuration information of any beam in the configuration information of the at least one uplink beam. For example, the configuration information of each uplink beam in the configuration information of the at least one uplink beam is arranged in the following sequence: the configuration information of the first beam, configuration information of a second beam, ..., configuration information of a Kth beam. The terminal device may determine the configuration information of the first beam as the configuration information of the first target beam for uplink transmission of the terminal device, that is, the configuration information of the first beam in the configuration information of the at least one uplink beam is the configuration information of the first target beam for uplink transmission of the terminal device. The configuration information of the first target beam for uplink transmission of the terminal device may also be determined according to a preset principle. For example, configuration information of a beam corresponding to relatively rich time-frequency resources in the configuration information may be determined as the configuration information of the first target beam for uplink transmission of the terminal device, or configuration information of any beam may also be determined as the configuration information of the first target beam for uplink transmission of the terminal device. There are no limits made thereto in the embodiment of the disclosure.

In at least one embodiment, the indication information may be included in the PUCCH, the SRS, the RACH or the first signal. The first signal is a dedicated signal for sending the indication information.

In at least one embodiment, the method further includes the following operations.

In condition that the terminal device does not receive a response message from the network device or does not receive downlink data sent by the network device within a preset time range, the terminal device retransmits the indication information or the uplink data on the first target beam.

Alternatively, in condition that the terminal device does not receive the response message from the network device or does not receive the downlink data sent by the network device within the preset time range and the at least one uplink beam includes at least two uplink beams, the terminal device determines configuration information of a third target beam in the configuration information of the at least one uplink beam, and performs uplink transmission by use of the resource indicated by the configuration information of the third target beam. The third target beam is a beam different from the first target beam.

Specifically, the network device, after receiving the indication information of the terminal device, may return the response message, and may also not return the response message but directly perform data transmission with the terminal device by use of the resources indicated by the first configuration information and the second configuration information. When the terminal device determines to adopt the configuration information of the first target beam for uplink transmission and the terminal device does not receive the response message from the network device or does not receive the downlink data sent by the network device within the preset time range, the terminal device may retransmit the indication information or the uplink data on the first target beam.

Alternatively, when the terminal device further determines that the at least one uplink beam includes the at least two uplink beams, the terminal device may determine the configuration information of the third target beam within the configuration information of the at least one uplink beam and perform uplink transmission by use of the resource indicated by the configuration information of the third target beam.

In at least one embodiment, the configuration information of each uplink beam includes at least one of: information about a resource for sending a PUCCH on the beam, information about a resource for sending an SRS on the beam, information about a resource for sending a RACH on the beam or information about a resource for sending a first signal on the beam.

In at least one embodiment, the information about the resource for sending the PUCCH on each beam includes at least one of: information about a time-domain resource for sending the PUCCH on the beam or information about a frequency-domain resource for sending the PUCCH on the beam.

The information about the resource for sending the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

Specifically, the information about the time-domain resource for sending the signal may be information on a radio frame, information on a subframe or information on a slot occupied for sending the signal.

In at least one embodiment, the configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each uplink beam has a one-to-one correspondence with an identifier of each uplink beam.

That is, the configuration information of each uplink beam in the configuration information of the at least one uplink beam is distinguished through identification information of each uplink beam, and the configuration information corresponding to each uplink beam may be uniquely determined through the identification information of the uplink beam. For example, the terminal device may adopt a form of [beam identifier 1 uplink configuration information 1], [beam identifier 2 uplink configuration information 2], ..., [beam identifier K uplink configuration information K] for storage, and may uniquely determine the uplink configuration information corresponding to each beam identifier through the beam identifier. In at least one embodiment, the identification information of each uplink beam may be an index of the uplink beam or an index of a beam group to which the uplink beam belongs. For example, the beam identifier may be an index of the corresponding beam and may also be an index of a beam group to which the beam belongs.

In at least one embodiment, an uplink beam corresponding to the configuration information of the uplink beam is identified through preset identification information.

Specifically, the terminal device may also preset a beam corresponding to the configuration information of each uplink beam, and in such a case, an identifier of the beam corresponding to the configuration information of the beam may be omitted. For example, it may be predefined the beam identifier k corresponding by default to the uplink configuration information k-1, and in such a case, the identification information of the beam identifier k may be omitted in the first configuration information. Alternatively, the configuration information of each uplink beam may be arranged according to the index of the beam, so that the configuration information of each uplink beam is not required to be identified through the identification information of each uplink beam.

In at least one embodiment, the configuration information of each downlink beam has a one-to-one correspondence with an identifier of each downlink beam.

That is, the configuration information of each downlink beam in the configuration information of the at least one downlink beam is distinguished through an identifier of each downlink beam, and the configuration information corresponding to each downlink beam may be uniquely determined through the identifier of the downlink beam. For example, the terminal device may adopt a form of [beam identifier 1' downlink configuration information 1], [beam identifier 2' downlink configuration information 2], ..., [beam identifier K' downlink configuration information K] for storage, and may uniquely determine the configuration information corresponding to each beam identifier through the beam identifier. In at least one embodiment, the identifier of each downlink beam is an index of the downlink beam or an index of a beam group to which the downlink beam belongs. That is, the beam identifier may be an index of the beam and may also be an index of the beam group to which the beam belongs.

In at least one embodiment, the configuration information of each downlink beam may include the configuration information of each downlink beam corresponding to each uplink beam.

For example, the uplink beams include Beam1, Beam2 and Beam3 and the downlink beams include Beaml', Beam2' and Beam3'. Then, the configuration information of Beam1' may include configuration information of Beam1-1', configuration information of Beam2-1' and configuration information of Beam3-1'. The configuration information of Beam1-1' represents the configuration information of Beam1' when the uplink beam is Beam1, the configuration information of Beam2-1' represents the configuration information of Beam1' when the uplink beam is Beam2, and the configuration information of Beam3-1' represents the configuration information of Beam1' when the uplink beam is Beam3. That is, the configuration information of the downlink beam is related to the corresponding uplink beam.

In at least one embodiment, the configuration information of each downlink beam may also be unrelated to the corresponding uplink beam. That is, whichever uplink beam is adopted, the configuration information of the downlink beam is the same.

In at least one embodiment, the downlink beam corresponding to the configuration information of each downlink beam is identified through preset identification information.

Specifically, the terminal device may also preset a beam corresponding to the configuration information of each downlink beam, and in such a case, an identifier of the beam corresponding to the configuration information of the beam may be omitted. For example, it may be predefined the beam identifier k corresponding by default to the downlink configuration information k-1. In such case, the identification information of the beam identifier k may be omitted in the second configuration information.

The method for transmitting data of the embodiments of the disclosure is described above in combination with FIG. 2 in detail from the angle of the terminal device and the method for transmitting data of the embodiments of the disclosure will be described below in combination with FIG. 4 in detail from the angle of the network device. It is to be understood that descriptions made on a network device side correspond to descriptions made on a terminal device side and similar descriptions may refer to the above, which will not be elaborated herein for avoiding repetitions.

FIG. 4 is a schematic flowchart of a method for transmitting data 300 according to an embodiment of the invention. As illustrated in FIG. 4, the method 300 includes the following operations.

In 301, a network device receives indication information or uplink data sent by a terminal device according to pre-stored first configuration information, and the indication information or the uplink data is configured to indicate that the terminal device uses the first configuration information.

In 302, a PDCCH is sent by use of second configuration information corresponding to the first configuration information according to the indication information or the uplink data, and the second configuration information indicates a resource for PDCCH detection by the terminal device.

The uplink data is uplink data sent by the terminal device via a resource indicated by the first configuration information. That is, the terminal device, after using the first configuration information, may send indication information to the network device to notify the network device that the terminal device has used the first configuration information, and may also not send the indication information but directly perform data transmission with the network device by use of the resources indicated by the first configuration information and the second configuration information. The network device, after receiving the indication information or uplink data sent by the terminal device according to the first configuration information, may send the PDCCH by use of the second configuration information corresponding to the first configuration information.

In at least one embodiment, the first configuration information is different from third configuration information, the second configuration information is different from fourth configuration information, the third configuration information indicates a resource presently used by the terminal device for uplink transmission, and the fourth configuration information indicates a resource presently used by the terminal device for detecting the PDCCH.

In some embodiments, the method further includes the following operation.

The network device sends the first configuration information and the second configuration information to the terminal device.

In at least one embodiment, the indication information is included in a PUCCH, an SRS, a RACH or a first signal. The first signal is a dedicated signal for sending the indication information.

In at least one embodiment, configuration information of each uplink beam includes at least one of: information about a resource for sending the PUCCH on the beam, information about a resource for sending the SRS on the beam, information about a resource for sending the RACH on the beam or information about a resource for sending the first signal on the beam.

In at least one embodiment, the information about the resource for sending the PUCCH on each beam includes at least one of: information about a time-domain resource for sending the PUCCH on the beam or information about a frequency-domain resource for sending the PUCCH on the beam.

The information about the resource for sending of the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

In at least one embodiment, configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each uplink beam has a one-to-one correspondence with an identifier of each uplink beam.

In at least one embodiment, an uplink beam corresponding to the configuration information of the uplink beam is identified through preset identification information.

In at least one embodiment, the configuration information of each downlink beam has a one-to-one correspondence with an identifier of each downlink beam.

In at least one embodiment, a downlink beam corresponding to the configuration information of the downlink beam is identified through preset identification information.

FIG. 5 is a schematic block diagram of a terminal device according to an embodiment of the invention. The terminal device 400 illustrated in FIG. 5 includes a determination unit 410 and a transceiver unit 420.

The determination unit 410 is configured to determine that a preset condition is met according to at least one of a present network condition or a service requirement of the terminal device.

The determination unit 410 is further configured to determine an available resource for uplink transmission of the terminal device according to pre-stored first configuration information. The first configuration information indicates the available resource for uplink transmission of the terminal device.

The transceiver unit 420 is configured to transmit uplink data via the determined available resource for uplink transmission of the terminal device.

In at least one embodiment, the determination unit 410 is further configured to determine a resource for PDCCH detection by the terminal device according to pre-stored second configuration information. The second configuration information indicates the resource for PDCCH detection by the terminal device.

The transceiver unit 420 is further configured to detect the PDCCH via the determined resource configured for PDCCH detection by the terminal device.

In at least one embodiment, the first configuration information is different from third configuration information, and the third configuration information indicates a resource presently used by the terminal device for uplink transmission.

That is, the resource indicated by the first configuration information and configured for uplink transmission of the terminal device may be different from a resource (i.e., the resource presently used for uplink transmission) indicated by the third configuration information.

In at least one embodiment, the second configuration information is different from fourth configuration information, and the fourth configuration information indicates a resource presently used by the terminal device for detecting the PDCCH.

In at least one embodiment, the determination unit 410 is specifically configured to determine that the preset condition is met according to at least one of signal quality of a downlink beam corresponding to the terminal device or interference to the downlink beam.

In at least one embodiment, the determination unit 410 is specifically configured to determine that the preset condition is met in response to at least one of the signal quality of the downlink beam being less than a first preset threshold or the interference to the downlink beam being greater than a second preset threshold.

In at least one embodiment, the first configuration information includes configuration information of at least one uplink beam, and the second configuration information includes configuration information of at least one downlink beam. The configuration information of each uplink beam indicates a resource for uplink transmission by the terminal device on the uplink beam, and the configuration information of each downlink beam indicates a resource for PDCCH detection by the terminal device on the downlink beam.

In at least one embodiment, the first configuration information includes the configuration information of the at least one uplink beam, and the configuration information of each uplink beam indicates the resource for uplink transmission by the terminal device on the uplink beam. The determination unit 410 is specifically configured to determine configuration information of a first target beam for uplink transmission of the terminal device within the configuration information of the at least one uplink beam and determine a resource indicated by the configuration information of the first target beam as the available resource for uplink transmission of the terminal device.

The transceiver unit 420 is further configured to: perform uplink transmission on the available resource indicated by the configuration information of the first target beam using the first target beam.

In at least one embodiment, the second configuration information includes the configuration information of the at least one downlink beam, and the configuration information of each downlink beam indicates the resource for PDCCH detection by the terminal device on the downlink beam. The determination unit 410 is specifically configured to determine configuration information of a second target beam for PDCCH detection by the terminal device within the configuration information of the at least one downlink beam, the second target beam being different from the downlink beam corresponding to the terminal device, and determine the resource indicated by the configuration information of the second target beam as the resource for PDCCH detection by the terminal device.

The transceiver unit 420 is specifically configured to: detect the PDCCH on the resource indicated by the configuration information of the second target beam using the second target beam.

In at least one embodiment, the determination unit 410 is specifically configured to: determine configuration information of a first beam in the configuration information of the at least one uplink beam as the configuration information of the first target beam for uplink transmission of the terminal device, or determine configuration information of any beam in the configuration information of the at least one uplink beam as the configuration information of the first target beam for uplink transmission of the terminal device.

In at least one embodiment, the transceiver unit 420 is further configured to send indication information to a network device. The indication information is configured to indicate that the terminal device uses the first configuration information.

In at least one embodiment, the indication information is included in a PUCCH, an SRS, a RACH or a first signal. The first signal is a dedicated signal for sending the indication information.

In at least one embodiment, the determination unit 410 is further configured to determine that a response message for the indication information from the network device is unreceived by the terminal device or downlink data from the network device is unreceived by the terminal device within a preset time range.

The transceiver unit 420 is further configured to retransmit the indication information or the uplink data on the first target beam.

The determination unit 410 is further configured to determine that the response message for the indication information from the network device is unreceived by the terminal device or the downlink data from the network device is unreceived by the terminal device within the preset time range and the at least one uplink beam includes at least two uplink beams and determine configuration information of a third target beam within the configuration information of the at least one uplink beam. The third target beam is a beam different from the first target beam.

The transceiver unit 420 is configured to send the indication information or the uplink data using the resource indicated by the configuration information of the third target beam.

In at least one embodiment, configuration information of each uplink beam includes at least one of: information about a resource for sending the PUCCH on the beam, information about a resource for sending the SRS on the beam, information about a resource for sending the RACH on the beam or information about a resource for sending the first signal on the beam.

The information about the resource for sending the PUCCH on each beam includes at least one of: information about a time-domain resource for sending the PUCCH on the beam or information about a frequency-domain resource for sending the PUCCH on the beam.

The information about the resource for sending of the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

In at least one embodiment, the configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each uplink beam has a one-to-one correspondence with an identifier of each uplink beam.

In at least one embodiment, the identifier of each uplink beam is an index of the uplink beam or an index of a beam group to which the uplink beam belongs.

In at least one embodiment, an uplink beam corresponding to the configuration information of the uplink beam is identified through preset identification information.

In at least one embodiment, the configuration information of each downlink beam has a one-to-one correspondence with an identifier of each downlink beam.

In at least one embodiment, identification information of a downlink beam is an index of the downlink beam or an index of a beam group to which the downlink beam belongs.

In at least one embodiment, a downlink beam corresponding to the configuration information of the downlink beam is identified through preset identification information.

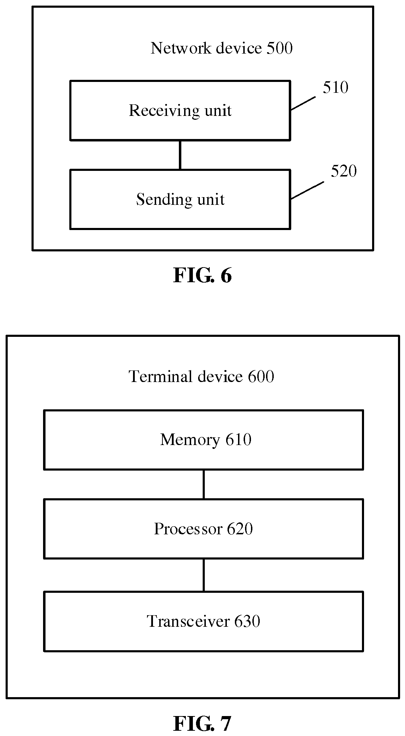

FIG. 6 is a schematic block diagram of a network device according to an embodiment of the invention. The network device 500 illustrated in FIG. 6 includes a receiving unit 510 and a sending unit 520.

The receiving unit 510 is configured to receive indication information or uplink data sent by a terminal device according to pre-stored first configuration information. The first configuration information indicates an available resource for uplink transmission of the terminal device and the indication information or the uplink data is configured to indicate that the terminal device uses the first configuration information.

The sending unit 520 is configured to send a PDCCH by use of second configuration information corresponding to the first configuration information according to the indication information or the uplink data. The second configuration information indicates a resource for PDCCH detection by the terminal device.

In at least one embodiment, the sending unit 520 is further configured to send the first configuration information and the second configuration information to the terminal device.

In at least one embodiment, the first configuration information is different from third configuration information, and the second configuration information is different from fourth configuration information. The third configuration information indicates a resource presently used by the terminal device for uplink transmission, and the fourth configuration information indicates a resource presently used by the terminal device for detecting the PDCCH.

In at least one embodiment, the first configuration information includes configuration information of at least one uplink beam, and the second configuration information includes configuration information of at least one downlink beam. The configuration information of each uplink beam indicates a resource for uplink transmission by the terminal device on the uplink beam, and the configuration information of each downlink beam indicates a resource for PDCCH detection by the terminal device on the downlink beam.

In at least one embodiment, the configuration information of each uplink beam includes at least one of: information about a resource for sending a PUCCH on the beam, information about a resource for sending an SRS on the beam, information about a resource for sending a RACH on the beam or information about a resource for sending a first signal on the beam. The first signal is a dedicated signal for sending the indication information.

In at least one embodiment, the indication information is included in the PUCCH, the SRS, the RACH or the first signal.

In at least one embodiment, the information about the resource for sending the PUCCH on each beam includes at least one of: information about a time-domain resource for sending the PUCCH on the beam or information about a frequency-domain resource for sending the PUCCH on the beam.

The information about the resource for sending of the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

In at least one embodiment, the configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each downlink beam includes the configuration information of each downlink beam corresponding to each uplink beam.

In at least one embodiment, the configuration information of each uplink beam has a one-to-one correspondence with an identifier of each uplink beam.

In at least one embodiment, the identifier of each uplink beam is an index of the uplink beam or an index of a beam group to which the uplink beam belongs.

In at least one embodiment, an uplink beam corresponding to the configuration information of the uplink beam is identified through preset identification information.

In at least one embodiment, the configuration information of each downlink beam has a one-to-one correspondence with an identifier of each downlink beam.

In at least one embodiment, identification information of a downlink beam is an index of the downlink beam or an index of a beam group to which the downlink beam belongs.

In at least one embodiment, a downlink beam corresponding to the configuration information of the downlink beam is identified through preset identification information.

FIG. 7 is a schematic block diagram of a terminal device according to an embodiment of the disclosure. The terminal device 600 illustrated in FIG. 7 includes a memory 610, a processor 620 and a transceiver 630. The memory 610 is configured to store a program. The processor 620 is configured to execute the program, and when the program is executed, the processor 620 determines that a preset condition is met according to at least one of a present network condition or a service requirement of the terminal device and configures a resource for uplink transmission of the terminal device according to pre-stored first configuration information. The first configuration information indicates the resource for uplink transmission of the terminal device. The transceiver 630 is configured to transmit uplink data by use of the determined available resource for uplink transmission of the terminal device.

In at least one embodiment, the processor 620 is further configured to determine a resource for PDCCH detection by the terminal device according to pre-stored second configuration information. The second configuration information indicates the resource for PDCCH detection by the terminal device.

The transceiver 630 is further configured to detect the PDCCH via the determined resource for PDCCH detection by the terminal device.

In at least one embodiment, the first configuration information is different from third configuration information, the second configuration information is different from fourth configuration information, the third configuration information indicates a resource presently used by the terminal device for uplink transmission, and the fourth configuration information indicates a resource presently used by the terminal device for detecting the PDCCH.

In at least one embodiment, the processor 620 is specifically configured to determine that the preset condition is met according to signal quality of a downlink beam corresponding to the terminal device and/or interference to the downlink beam.

In at least one embodiment, the processor 620 is specifically configured to determine that the preset condition is met in condition that the signal quality of the downlink beam is less than a first preset threshold and/or the interference to the downlink beam is greater than a second preset threshold.

In at least one embodiment, the first configuration information includes configuration information of at least one uplink beam, and the second configuration information includes configuration information of at least one downlink beam. The configuration information of each uplink beam indicates a resource for uplink transmission by the terminal device on the uplink beam, and the configuration information of each downlink beam indicates a resource for PDCCH detection by the terminal device on the downlink beam.

In at least one embodiment, the first configuration information includes the configuration information of the at least one uplink beam, and the configuration information of each uplink beam indicates the resource for uplink transmission by the terminal device on the uplink beam. The processor 620 is specifically configured to: determine configuration information of a first target beam for uplink transmission of the terminal device from the configuration information of the at least one uplink beam and determine a resource indicated by the configuration information of the first target beam as the available resource for uplink transmission of the terminal device.

The transceiver 630 is further configured to perform uplink transmission on the available resource indicated by the configuration information of the first target beam using the first target beam.

In at least one embodiment, the second configuration information includes the configuration information of the at least one downlink beam, and the configuration information of each downlink beam indicates the resource for PDCCH detection by the terminal device on the downlink beam. The processor 620 is specifically configured to: determine configuration information of a second target beam for PDCCH detection by the terminal device from the configuration information of the at least one downlink beam, the second target beam being a beam different from the downlink beam corresponding to the terminal device, and determine a resource indicated by the configuration information of the second target beam as the resource for PDCCH detection by the terminal device.

The transceiver 630 is specifically configured to detect the PDCCH on the resource indicated by the configuration information of the second target beam using the second target beam.

In at least one embodiment, the processor 620 is specifically configured to: determine configuration information of a first beam in the configuration information of the at least one uplink beam as the configuration information of the first target beam for uplink transmission of the terminal device, or determine configuration information of any beam in the configuration information of the at least one uplink beam as the configuration information of the first target beam for uplink transmission of the terminal device.

In at least one embodiment, the transceiver 630 is further configured to send indication information to a network device. The indication information is configured to indicate that the terminal device uses the first configuration information.

In at least one embodiment, the indication information is included in a PUCCH, an SRS, a RACH or a first signal. The first signal is a dedicated signal for sending the indication information.

In at least one embodiment, the processor 620 is further configured to determine that the terminal device does not receive a response message for the indication information from the network device or does not receive downlink data sent by the network device within a preset time range.

The transceiver 630 is further configured to retransmit the indication information or the uplink data on the first target beam.

The processor 620 is further configured to determine that the terminal device does not receive the response message for the indication information from the network device or does not receive the downlink data sent by the network device within the preset time range and the at least one uplink beam includes at least two uplink beams, and determine configuration information of a third target beam from the configuration information of the at least one uplink beam. The third target beam is a beam different from the first target beam.

The transceiver 630 is configured to send the indication information or the uplink data via the resource indicated by the configuration information of the third target beam.

In at least one embodiment, the configuration information of each uplink beam includes at least one of: information about a resource for sending the PUCCH on the beam, information about a resource for sending the SRS on the beam, information about a resource for sending the RACH on the beam or information about a resource for sending the first signal on the beam.

The information about the resource for sending the PUCCH on each beam includes at least one of: information about a time-domain resource for sending the PUCCH on the beam or information about a frequency-domain resource for sending the PUCCH on the beam.

The information about the resource for sending of the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

In at least one embodiment, the configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each downlink beam includes the configuration information of each downlink beam corresponding to each uplink beam.

In at least one embodiment, the configuration information of each uplink beam has a one-to-one correspondence with an identifier of each uplink beam.

In at least one embodiment, the identifier of each uplink beam is an index of the uplink beam or an index of a beam group to which the uplink beam belongs.

In at least one embodiment, an uplink beam corresponding to the configuration information of the uplink beam is identified through preset identification information.

In at least one embodiment, the configuration information of each downlink beam has a one-to-one correspondence with an identifier of each downlink beam.

In at least one embodiment, identification information of a downlink beam is an index of the downlink beam or an index of a beam group to which the downlink beam belongs.

In at least one embodiment, a downlink beam corresponding to the configuration information of the downlink beam is identified through preset identification information.

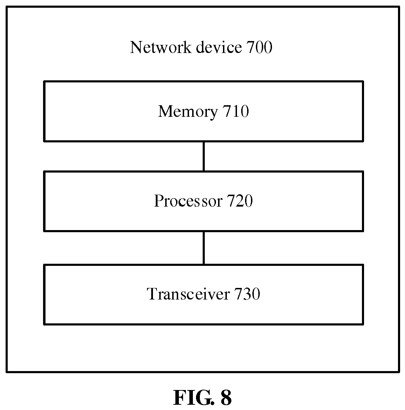

FIG. 8 is a schematic block diagram of a network device according to an embodiment of the disclosure. The network device 700 illustrated in FIG. 8 includes a memory 710, a processor 720 and a transceiver 730. The memory 710 is configured to store a program. The processor 720 is configured to execute the program, and when the program is executed, the processor 720 sends first configuration information and second configuration information to a terminal device through the transceiver 730, the first configuration information indicating a resource for uplink transmission of the terminal device and the second configuration information indicating a resource for PDCCH detection by the terminal device, and receives indication information or uplink data sent by the terminal device according to the pre-stored first configuration information and second configuration information. The indication information or the uplink data is configured to indicate that the terminal device uses the first configuration information and the second configuration information.

In at least one embodiment, the first configuration information includes configuration information of at least one uplink beam, and the second configuration information includes configuration information of at least one downlink beam. The configuration information of each uplink beam indicates a resource for uplink transmission by the terminal device on the uplink beam, and the configuration information of each downlink beam indicates a resource for PDCCH detection by the terminal device on the downlink beam.

In at least one embodiment, the configuration information of each uplink beam includes at least one of: information about a resource for sending a PUCCH on the beam, information about a resource for sending an SRS on the beam, information about a resource for sending a RACH on the beam or information about a resource for sending a first signal on the beam. The first signal is a dedicated signal for sending the indication information.

In at least one embodiment, the indication information is included in the PUCCH, the SRS, the RACH or the first signal.

In at least one embodiment, the information about the resource for sending the PUCCH on each beam includes at least one of: information about a time-domain resource for sending the PUCCH on the beam or information about a frequency-domain resource for sending the PUCCH on the beam.

The information about the resource for sending of the SRS on each beam includes at least one of: information about a time-domain resource for sending the SRS on the beam or information about a frequency-domain resource for sending the SRS on the beam.

The information about the resource for sending the RACH on each beam includes at least one of: information about a time-domain resource for sending the RACH on the beam or information about a frequency-domain resource for sending the RACH on the beam.

The information about the resource for sending the first signal on each beam includes at least one of: information about a time-domain resource for sending the first signal on the beam or information about a frequency-domain resource for sending the first signal on the beam.

In at least one embodiment, the configuration information of each downlink beam includes at least one of: information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

In at least one embodiment, the configuration information of each uplink beam has a one-to-one correspondence with an identifier of each uplink beam.

In at least one embodiment, the identifier of each uplink beam is an index of the uplink beam or an index of a beam group to which the uplink beam belongs.

In at least one embodiment, an uplink beam corresponding to the configuration information of the uplink beam is identified through preset identification information.

In at least one embodiment, the configuration information of each downlink beam has a one-to-one correspondence with an identifier of each downlink beam.

In at least one embodiment, identification information of a downlink beam is an index of the downlink beam or an index of a beam group to which the downlink beam belongs.

In at least one embodiment, a downlink beam corresponding to the configuration information of the downlink beam is identified through preset identification information.

It is to be understood that the term "and/or" in the disclosure is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

It is to be understood that, in various embodiments of the disclosure, a magnitude of a sequence number of each process does not mean an execution sequence and the execution sequence of each process should be determined by its function and an internal logic and should not form any limit to an implementation process of the embodiments of the disclosure.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a Read-Only Memory (ROM), a Random Access Memory (RAM), a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for transmitting data, comprising:
determining, by a terminal device, that a preset condition is met according to at least one of a present network condition or a service requirement of the terminal device;
determining, by the terminal device, an available resource for uplink transmission of the terminal device according to pre-stored first configuration information, the first configuration information indicating the available resource for uplink transmission of the terminal device; and
transmitting, by the terminal device, uplink data via the determined available resource for uplink transmission of the terminal device.

2. The method of claim 1, further comprising:
determining, by the terminal device according to pre-stored second configuration information corresponding to the first configuration information, a resource for Physical Downlink Control Channel, PDCCH, detection by the terminal device, the second configuration information indicating the resource for PDCCH detection by the terminal device; and
detecting, by the terminal device, the PDCCH via the determined resource for PDCCH detection by the terminal device.

3. The method of claim 1 or 2, wherein determining, by the terminal device, that the preset condition is met according to at least one of the present network condition or the service requirement of the terminal device comprises:
determining, by the terminal device, that the preset condition is met according to at least one of signal quality of a downlink beam corresponding to the terminal device or interference to the downlink beam.

4. The method of claim 3, wherein determining, by the terminal device, that the preset condition is met according to at least one of the signal quality of the downlink beam corresponding to the terminal device or the interference to the downlink beam comprises:
determining, by the terminal device in response to at least one of the signal quality of the downlink beam being less than a first preset threshold or the interference to the downlink beam being greater than a second preset threshold, that the preset condition is met.

5. The method of any one of claims 1-4, wherein the first configuration information comprises configuration information of at least one uplink beam, configuration information of each uplink beam indicates a resource for uplink transmission by the terminal device on the uplink beam, and determining, by the terminal device, the available resource for uplink transmission of the terminal device according to the pre-stored first configuration information comprises:
determining, by the terminal device, configuration information of a first target beam for uplink transmission of the terminal device within the configuration information of the at least one uplink beam; and
determining, by the terminal device, a resource indicated by the configuration information of the first target beam as the available resource for uplink transmission of the terminal device; and
transmitting, by the terminal device, the uplink data via the determined available resource for uplink transmission of the terminal device comprises:
performing uplink transmission on the available resource indicated by the configuration information of the first target beam using the first target beam.

6. The method of claim 5, wherein the configuration information of each uplink beam comprises at least one of:
information about a resource for sending a Physical Uplink Control Channel, PUCCH, on the uplink beam, information about a resource for sending a Sounding Reference Signal, SRS, on the uplink beam, information about a resource for sending a Random Access Channel, RACH, on the uplink beam, or information about a resource for sending a first signal on the uplink beam, the first signal being a dedicated signal for sending indication information.

7. The method of claim 6, wherein the information about the resource for sending the PUCCH on the uplink beam comprises at least one of: information about a time-domain resource for sending the PUCCH on the uplink beam or information about a frequency-domain resource for sending the PUCCH on the uplink beam;
the information about the resource for sending of the SRS on the uplink beam comprises at least one of:
information about a time-domain resource for sending the SRS on the uplink beam or information about a frequency-domain resource for sending the SRS on the uplink beam;
the information about the resource for sending the RACH on the beam comprises at least one of:
information about a time-domain resource for sending the RACH on the uplink beam or information about a frequency-domain resource for sending the RACH on the uplink beam; and
the information about the resource for sending the first signal on the beam comprises at least one of:
information about a time-domain resource for sending the first signal on the uplink beam or information about a frequency-domain resource for sending the first signal on the uplink beam.

8. The method of any one of claims 5-7, wherein the configuration information of each uplink beam has a one-to-one correspondence with identification information of each uplink beam.

9. The method of claim 8, wherein the identification information of each uplink beam is an index of the uplink beam or an index of a beam group to which the uplink beam belongs.

10. The method of any one of claims 5-7, wherein an uplink beam corresponding to the configuration information of the uplink beam is identified via preset identification information.

11. The method of any one of claims 2-10, wherein the second configuration information comprises configuration information of at least one downlink beam, configuration information of each downlink beam indicates a resource for PDCCH detection by the terminal device on the downlink beam, and determining, by the terminal device, the resource for PDCCH detection by the terminal device according to the pre-stored second configuration information comprises:
determining, by the terminal device, configuration information of a second target beam for PDCCH detection by the terminal device within the configuration information of the at least one downlink beam, the second target beam being different from the downlink beam corresponding to the terminal device; and
determining a resource indicated by the configuration information of the second target beam as the resource for PDCCH detection by the terminal device; and
detecting, by the terminal device, the PDCCH via the determined resource configured for PDCCH detection by the terminal device comprises:
detecting the PDCCH on the resource indicated by the configuration information of the second target beam using the second target beam.

12. The method of claim 11, wherein the configuration information of each downlink beam comprises configuration information of each downlink beam corresponding to each uplink beam.

13. The method of claim 11 or 12, wherein the configuration information of each downlink beam comprises at least one of:
information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

14. The method of any one of claims 11-13, wherein the configuration information of each downlink beam has a one-to-one correspondence with identification information of each downlink beam.

15. The method of claim 14, wherein the identification information of the downlink beam is an index of the downlink beam or an index of a beam group to which the downlink beam belongs.

16. The method of any one of claims 6-13, wherein a downlink beam corresponding to the configuration information of the downlink beam is identified via preset identification information.

17. The method of any one of claims 1-16, further comprising:
sending, by the terminal device, indication information to a network device, the indication information being configured to indicate that the terminal device uses the first configuration information.

18. The method of claim 17, wherein the indication information is carried in the PUCCH, the SRS, the RACH or the first signal.

19. The method of claim 17 or 18, further comprising:
in condition that a response message for the indication information from the network device is unreceived by the terminal device or downlink data from the network device is unreceived by the terminal device within a preset time range, retransmitting, by the terminal device, the indication information or the uplink data on the first target beam; or
in condition that the response message for the indication information from the network device is unreceived by the terminal device or the downlink data from the network device is unreceived by the terminal device within the preset time range and the at least one uplink beam comprises at least two uplink beams, determining, by the terminal device, configuration information of a third target beam within the configuration information of the at least one uplink beam, the third target beam being different from the first target beam, and sending the indication information or the uplink data on the resource indicated by the configuration information of the third target beam.

20. The method of any one of claims 5-19, wherein determining, by the terminal device, the configuration information of the first target beam for uplink transmission of the terminal device within the configuration information of the at least one uplink beam comprises:
determining, by the terminal device, configuration information of a first beam in the configuration information of the at least one uplink beam as the configuration information of the first target beam for uplink transmission of the terminal device, the configuration information of the at least one uplink beam being arranged according to the configuration information of each beam; or
determining, by the terminal device, configuration information of any beam in the configuration information of the at least one uplink beam as the configuration information of the first target beam for uplink transmission of the terminal device.

21. The method of any one of claims 1-20, wherein the first configuration information is different from third configuration information, the third configuration information indicating a resource presently used by the terminal device for uplink transmission.

22. The method of any one of claims 2-21, wherein the second configuration information is different from fourth configuration information, the fourth configuration information indicating a resource presently used by the terminal device for detecting the PDCCH.

23. A method for transmitting data, comprising:
receiving, by a network device, indication information or uplink data sent by a terminal device according to pre-stored first configuration information, the first configuration information indicating an available resource for uplink transmission of the terminal device and the indication information or the uplink data being configured to indicate that the terminal device uses the first configuration information; and
sending, by the network device according to the indication information or the uplink data, a Physical Downlink Control Channel, PDCCH, using second configuration information corresponding to the first configuration information, the second configuration information indicating a resource for PDCCH detection by the terminal device.

24. The method of claim 23, further comprising:
sending, by the network device, the first configuration information and the second configuration information to the terminal device.

25. The method of claim 23 or 24, wherein the first configuration information comprises configuration information of at least one uplink beam, and configuration information of each uplink beam indicates a resource for uplink transmission by the terminal device on the uplink beam.

26. The method of claim 25, wherein the configuration information of each uplink beam comprises at least one of:
information about a resource for sending a Physical Uplink Control Channel, PUCCH, on the uplink beam, information about a resource for sending a Sounding Reference Signal, SRS, on the uplink beam, information about a resource for sending a Random Access Channel, RACH, on the uplink beam, or information about a resource for sending a first signal on the uplink beam, the first signal being a dedicated signal for sending indication information.

27. The method of claim 26, wherein the information about the resource for sending the PUCCH on the uplink beam comprises at least one of: information about a time-domain resource for sending the PUCCH on the uplink beam or information about a frequency-domain resource for sending the PUCCH on the uplink beam;
the information about the resource for sending the SRS on the uplink beam comprises at least one of:
information about a time-domain resource for sending the SRS on the uplink beam or information about a frequency-domain resource for sending the SRS on the uplink beam;
the information about the resource for sending the RACH on the beam comprises at least one of:
information about a time-domain resource for sending the RACH on the uplink beam or information about a frequency-domain resource for sending the RACH on the uplink beam; and
the information about the resource for sending the first signal on the beam comprises at least one of:
information about a time-domain resource for sending the first signal on the uplink beam or information about a frequency-domain resource for sending the first signal on the uplink beam.

28. The method of claim 26 or 27, wherein the indication information is carried in the PUCCH, the SRS, the RACH or the first signal.

29. The method of any one of claims 23-28, wherein the second configuration information comprises configuration information of at least one downlink beam, and configuration information of each downlink beam indicates a resource for PDCCH detection by the terminal device on the downlink beam.

30. The method of claim 29, wherein the configuration information of each downlink beam comprises configuration information of each downlink beam corresponding to each uplink beam.

31. The method of claim 29 or 30, wherein the configuration information of each downlink beam comprises at least one of:
information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

32. The method of any one of claims 29-31, wherein the configuration information of each uplink beam has a one-to-one correspondence with identification information of each uplink beam.

33. The method of claim 32, wherein the identification information of each uplink beam is an index of the uplink beam or an index of a beam group to which the uplink beam belongs.

34. The method of any one of claims 25-31, wherein an uplink beam corresponding to the configuration information of the uplink beam is identified via preset identification information.

35. The method of any one of claims 29-34, wherein the configuration information of each downlink beam has a one-to-one correspondence with identification information of each downlink beam.

36. The method of claim 35, wherein the identification information of the downlink beam is an index of the downlink beam or an index of a beam group to which the downlink beam belongs.

37. The method of any one of claims 29-34, wherein a downlink beam corresponding to the configuration information of the downlink beam is identified via preset identification information.

38. The method of any one of claims 23-37, wherein the first configuration information is different from third configuration information, the second configuration information is different from fourth configuration information, the third configuration information indicates a resource presently used by the terminal device for uplink transmission, and the fourth configuration information indicates a resource presently used by the terminal device for detecting the PDCCH.

39. A terminal device, comprising:
a determination unit, configured to determine that a preset condition is met according to at least one of a present network condition or a service requirement of the terminal device,
wherein the determination unit is further configured to determine an available resource for uplink transmission of the terminal device according to pre-stored first configuration information, the first configuration information indicating the available resource for uplink transmission of the terminal device; and
a transceiver unit, configured to transmit uplink data via the determined available resource for uplink transmission of the terminal device.

40. The terminal device of claim 39, wherein the determination unit is further configured to:
determine a resource for Physical Downlink Control Channel, PDCCH, detection by the terminal device according to pre-stored second configuration information, the second configuration information indicating the resource for PDCCH detection by the terminal device; and
the transceiver unit is further configured to detect the PDCCH via the determined resource for PDCCH detection by the terminal device.

41. The terminal device of claim 39 or 40, wherein the determination unit is specifically configured to:
determine that the preset condition is met according to at least one of signal quality of a downlink beam corresponding to the terminal device or interference to the downlink beam.

42. The terminal device of claim 41, wherein the determination unit is further configured to:
determine that the preset condition is met in response to at least one of the signal quality of the downlink beam being less than a first preset threshold or the interference to the downlink beam being greater than a second preset threshold.

43. The terminal device of any one of claims 39-42, wherein the first configuration information comprises configuration information of at least one uplink beam, configuration information of each uplink beam indicates a resource for uplink transmission by the terminal device on the uplink beam, and the determination unit is specifically configured to:
determine configuration information of a first target beam for uplink transmission of the terminal device within the configuration information of the at least one uplink beam; and
determine a resource indicated by the configuration information of the first target beam as the available resource for uplink transmission of the terminal device; and
the transceiver unit is further configured to:
perform uplink transmission on the available resource indicated by the configuration information of the first target beam using the first target beam.

44. The terminal device of claim 43, wherein the configuration information of each uplink beam comprises at least one of:
information about a resource for sending a Physical Uplink Control Channel, PUCCH, on the uplink beam, information about a resource for sending a Sounding Reference Signal, SRS, on the uplink beam, information about a resource for sending a Random Access Channel, RACH, on the uplink beam, or information about a resource for sending a first signal on the uplink beam, the first signal being a dedicated signal for sending indication information.

45. The terminal device of claim 44, wherein the information about the resource for sending the PUCCH on the uplink beam comprises at least one of: information about a time-domain resource for sending the PUCCH on the uplink beam or information about a frequency-domain resource for sending the PUCCH on the uplink beam;
the information about the resource for sending of the SRS on the uplink beam comprises at least one of:
information about a time-domain resource for sending the SRS on the uplink beam or information about a frequency-domain resource for sending the SRS on the uplink beam;
the information about the resource for sending the RACH on the beam comprises at least one of:
information about a time-domain resource for sending the RACH on the uplink beam or information about a frequency-domain resource for sending the RACH on the uplink beam; and
the information about the resource for sending the first signal on the beam comprises at least one of:
information about a time-domain resource for sending the first signal on the uplink beam or information about a frequency-domain resource for sending the first signal on the uplink beam.

46. The terminal device of any one of claims 43-45, wherein the configuration information of each uplink beam has a one-to-one correspondence with identification information of each uplink beam.

47. The terminal device of claim 46, wherein the identification information of each uplink beam is an index of the uplink beam or an index of a beam group to which the uplink beam belongs.

48. The terminal device of any one of claims 43-45, wherein an uplink beam corresponding to the configuration information of the uplink beam is identified via preset identification information.

49. The terminal device of any one of claims 40-48, wherein the second configuration information comprises configuration information of at least one downlink beam, configuration information of each downlink beam indicates a resource for PDCCH detection by the terminal device on the downlink beam, and the determination unit is specifically configured to:
determine configuration information of a second target beam for PDCCH detection by the terminal device within the configuration information of the at least one downlink beam, the second target beam being different from the downlink beam corresponding to the terminal device, and
determine a resource indicated by the configuration information of the second target beam as the resource for PDCCH detection by the terminal device; and
the transceiver unit is specifically configured to detect the PDCCH on the resource indicated by the configuration information of the second target beam using the second target beam.

50. The terminal device of claim 49, wherein the configuration information of each downlink beam comprises configuration information of each downlink beam corresponding to each uplink beam.

51. The terminal device of claim 49 or 50, wherein the configuration information of each downlink beam comprises at least one of:
information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

52. The terminal device of any one of claims 49-51, wherein the configuration information of each downlink beam has a one-to-one correspondence with identification information of each downlink beam.

53. The terminal device of claim 52, wherein the identification information of the downlink beam is an index of the downlink beam or an index of a beam group to which the downlink beam belongs.

54. The terminal device of any one of claims 44-51, wherein a downlink beam corresponding to the configuration information of the downlink beam is identified via preset identification information.

55. The terminal device of any one of claims 39-54, further comprising:
sending the indication information to a network device by the terminal device, the indication information being configured to indicate that the terminal device uses the first configuration information.

56. The terminal device of claim 55, wherein the indication information is carried in the PUCCH, the SRS, the RACH or the first signal.

57. The terminal device of claim 55 or 56, wherein the determination unit is further configured to:
determine that a response message for the indication information from the network device is unreceived by the terminal device or downlink data from the network device is unreceived by the terminal device within a preset time range;
the transceiver unit is further configured to retransmit the indication information or the uplink data on the first target beam;
the determination unit is further configured to determine that the response message for the indication information from the network device is unreceived by the terminal device or the downlink data from the network device is unreceived by the terminal device within the preset time range and the at least one uplink beam comprises at least two uplink beams, and determine configuration information of a third target beam within the configuration information of the at least one uplink beam, the third target beam being different from the first target beam; and
the transceiver unit is further configured to send the indication information or the uplink data using the third target beam on the resource indicated by the configuration information of the third target beam.

58. The terminal device of any one of claims 43-57, wherein the determination unit is specifically configured to:
determine configuration information of a first beam in the configuration information of the at least one uplink beam as the configuration information of the first target beam for uplink transmission of the terminal device, the configuration information of the at least one uplink beam being arranged according to the configuration information of each beam, or
determine configuration information of any beam in the configuration information of the at least one uplink beam as the configuration information of the first target beam for uplink transmission of the terminal device.

59. The terminal device of any one of claims 39-58, wherein the first configuration information is different from third configuration information, the third configuration information indicating a resource presently used by the terminal device for uplink transmission.

60. The terminal device of any one of claims 40-59, wherein the second configuration information is different from fourth configuration information, the fourth configuration information indicating a resource presently used by the terminal device for detecting the PDCCH.

61. A network device, comprising:
a receiving unit, configured to receive indication information or uplink data sent by a terminal device according to pre-stored first configuration information, the first configuration information indicating an available resource for uplink transmission of the terminal device and the indication information or the uplink data being configured to indicate that the terminal device uses the first configuration information; and
a sending unit, configured to send a Physical Downlink Control Channel, PDCCH, using second configuration information corresponding to the first configuration information according to the indication information or the uplink data, the second configuration information indicating a resource for PDCCH detection by the terminal device.

62. The network device of claim 61, wherein the sending unit is further configured to:
send the first configuration information and the second configuration information to the terminal device.

63. The network device of claim 61 or 62, wherein the first configuration information comprises configuration information of at least one uplink beam, and configuration information of each uplink beam indicates a resource for uplink transmission by the terminal device on the uplink beam.

64. The network device of claim 63, wherein the configuration information of each uplink beam comprises at least one of:
information about a resource for sending a Physical Uplink Control Channel, PUCCH, on the uplink beam, information about a resource for sending a Sounding Reference Signal, SRS, on the uplink beam, information about a resource for sending a Random Access Channel, RACH, on the uplink beam, or information about a resource for sending a first signal on the uplink beam, the first signal being a dedicated signal for sending indication information.

65. The network device of claim 64, wherein the information about the resource for sending the PUCCH on the uplink beam comprises at least one of: information about a time-domain resource for sending the PUCCH on the uplink beam or information about a frequency-domain resource for sending the PUCCH on the uplink beam;
the information about the resource for sending the SRS on the uplink beam comprises at least one of:
information about a time-domain resource for sending the SRS on the uplink beam or information about a frequency-domain resource for sending the SRS on the uplink beam;
the information about the resource for sending the RACH on the beam comprises at least one of:
information about a time-domain resource for sending the RACH on the uplink beam or information about a frequency-domain resource for sending the RACH on the uplink beam; and
the information about the resource for sending the first signal on the beam comprises at least one of:
information about a time-domain resource for sending the first signal on the uplink beam or information about a frequency-domain resource for sending the first signal on the uplink beam.

66. The network device of claim 64 or 65, wherein the indication information is carried in the PUCCH, the SRS, the RACH or the first signal.

67. The network device of any one of claims 61-66, wherein the second configuration information comprises configuration information of at least one downlink beam, and configuration information of each downlink beam indicates a resource for PDCCH detection by the terminal device on the downlink beam.

68. The network device of claim 67, wherein the configuration information of each downlink beam comprises configuration information of each downlink beam corresponding to each uplink beam.

69. The network device of claim 67 or 68, wherein the configuration information of each downlink beam comprises at least one of:
information about a time-domain resource for detecting a search space of the PDCCH on the downlink beam, information about a frequency-domain resource for detecting the search space of the PDCCH on the downlink beam or information about a format for detecting the search space of the PDCCH on the downlink beam.

70. The network device of any one of claims 67-69, wherein the configuration information of each uplink beam has a one-to-one correspondence with identification information of each uplink beam.

71. The network device of claim 70, wherein the identification information of each uplink beam is an index of the uplink beam or an index of a beam group to which the uplink beam belongs.

72. The network device of any one of claims 63-69, wherein an uplink beam corresponding to the configuration information of the uplink beam is identified via preset identification information.

73. The network device of any one of claims 67-72, wherein the configuration information of each downlink beam has a one-to-one correspondence with identification information of each downlink beam.

74. The network device of claim 73, wherein the identification information of the downlink beam is an index of the downlink beam or an index of a beam group to which the downlink beam belongs.

75. The network device of any one of claims 67-72, wherein a downlink beam corresponding to the configuration information of the downlink beam is identified via preset identification information.

76. The network device of any one of claims 61-75, wherein the first configuration information is different from third configuration information, the second configuration information is different from fourth configuration information, the third configuration information indicates a resource presently used by the terminal device for uplink transmission, and the fourth configuration information indicates a resource presently used by the terminal device for detecting the PDCCH.
